# EUROPEAN PATENT APPLICATION

(11) **EP 4 818 950 A1**
(43) Date of publication of application: **07.10.2026**
(21) Application number: 26163207.9
(22) Date of filing: 09.03.2026
(51) Int. Cl.: G06F 21/57

(54) **SECURE PERIPHERAL DEVICE STATE TRANSFER DURING TRUSTED VIRTUAL MACHINE MIGRATION**

(30) Priority: 31.03.2025 US 202519096429
(71) Applicant: Microsoft Technology Licensing, LLC, Redmond, WA 98052-6399 (US)
(72) Inventor: Ish Am, Oren, Redmond, WA 98056 (US); Lange, Jonathan Edward, Redmond, WA 98056 (US); Oshins, Jacob Kappeler, Redmond, WA 98056 (US)
(74) Representative: Grünecker Patent- und Rechtsanwälte PartG mbB

(57) **Abstract**

Methods, apparatuses, and products for secure peripheral device state transfer during trusted virtual machine migration, including: receiving, by a first instance of a trusted virtual machine and from a first peripheral device coupled to a first host executing the first instance of the trusted virtual machine, a first hash value calculated based on a state of the first peripheral device; loading, by the first instance of the trusted virtual machine, a second hash value calculated based on a state of a second peripheral device coupled to a second host; and trusting, by the first instance of the trusted virtual machine, the first peripheral device based on a match between the first hash value and the second hash value.

## Description

Virtual machines may need to be periodically migrated from one host to another due to various reasons, including capacity issues, host failover, and the like. This may include migrating data capturing the state of the virtual machine and its memory at the time of migration. Trusted virtual machines are a particular class of virtual machines that maintain a trusted execution environment (TEE), isolating their data and applications from external entities including the platform hosting the trusted virtual machine. When migrating trusted virtual machines, the migration process must ensure that the data isolation and confidentiality afforded by the TEE is preserved.

Conventional approaches for migrating trusted virtual machines are incomplete. For example, if the trusted virtual machine uses any peripheral devices, the state of these peripheral devices may also need migrating to the new host. However, existing implementations for migrating trusted virtual machines do not ensure secure migration of the state of peripheral devices as these approaches may use insecure or untrusted channels to transfer data encoding the state of the peripheral device.

As the data encoding the state of a peripheral device may be transferred using insecure or untrusted channels there is the possibility that this data will be modified or otherwise compromised. For example, a malicious actor can potentially modify data encoding the state of the peripheral device in order to expose potential attack vectors for a trusted virtual machine using the peripheral device. Accordingly, a compromised peripheral device presents the risk of exposing and violating the TEE of a trusted virtual machine.

### SUMMARY

According to embodiments of the present disclosure, various methods, apparatus, and products for secure peripheral device state transfer during trusted virtual machine migration are described herein. In some aspects, secure peripheral device state transfer during trusted virtual machine migration includes: receiving, by a first instance of a trusted virtual machine and from a first peripheral device coupled to a first host executing the first instance of the trusted virtual machine, a first hash value calculated based on a state of the first peripheral device; loading, by the first instance of the trusted virtual machine, a second hash value calculated based on a state of a second peripheral device coupled to a second host; and trusting, by the first instance of the trusted virtual machine, the first peripheral device based on a match between the first hash value and the second hash value. In some aspects, an apparatus may include a memory and one or more processing devices, operatively coupled to the memory, the one or more processing devices configured to perform similar steps. In some aspects, a computer program product comprising a computer readable storage medium may store computer program instructions that, when executed, perform similar steps.

### BRIEF DESCRIPTION OF DRAWINGS

Fig. 1 sets forth a diagram of an example system for secure peripheral device state transfer during trusted virtual machine migration in accordance with some embodiments.
Fig. 2 sets forth a flow chart illustrating an example method of secure peripheral device state transfer during trusted virtual machine migration in accordance with some embodiments.
Fig. 3 sets forth a flow chart illustrating an additional example method of secure peripheral device state transfer during trusted virtual machine migration in accordance with some embodiments.
Fig. 4 sets forth a flow chart illustrating an additional example method of secure peripheral device state transfer during trusted virtual machine migration in accordance with some embodiments.
Fig. 5 sets forth a flow chart illustrating an additional example method of secure peripheral device state transfer during trusted virtual machine migration in accordance with some embodiments.
Fig. 6 sets forth a flow chart illustrating an additional example method of secure peripheral device state transfer during trusted virtual machine migration in accordance with some embodiments.
Fig. 7 illustrates an exemplary computing device that may be specifically configured to perform one or more of the processes described in the present disclosure.
Fig. 8 sets forth a block diagram of a cloud service provider service architecture in accordance with some embodiments of the present disclosure.

### DESCRIPTION OF EMBODIMENTS

Users may leverage the hardware and software resources of third-party hosting platforms to support their virtual machines. As these virtual machines depend on the resources of the third-party hosting platform, the platform may have access to the data in these virtual machines or may otherwise affect their execution. To address these concerns, platforms may offer trusted execution environments (TEEs), including trusted virtual machines (trusted virtual machines), that isolate the data within the TEE from the rest of the host. This may include using trusted peripheral devices that can isolate use of the peripheral device by the trusted virtual machine from the rest of the host.

Virtual machines may need to be periodically migrated from one host to another due to various reasons, including capacity issues, host failover, and the like. This may include migrating data capturing the state of the virtual machine and its memory at the time of migration. Trusted virtual machines must be migrated securely in order to preserve the integrity and trust of the trusted virtual machine. Existing implementations for migrating trusted virtual machines allow for securely migrating the state of the trusted virtual machine and its memory. However, these approaches do not ensure secure migration of the state of any trusted peripheral devices used by the trusted virtual machine. This may leave the trusted virtual machine vulnerable should a peripheral device of the target host be compromised.

To address these shortcomings, the approaches set forth herein provide a system for securely transferring the state of peripheral devices using secure peripheral device state transfer during trusted virtual machine migration. A trusted virtual machine to be migrated from a source host to a target host can request a hash value calculated based on the state of the peripheral device. For example, the trusted virtual machine may request a Trusted Execution Environment (TEE) Device Interface Security Protocol (TDISP) Device Interface Report (DIR) that includes this hash. After migration to the target host, data capturing the state of the peripheral device can be loaded from the trusted virtual machine into a peripheral device on the target host. The trusted virtual machine can request another hash from the peripheral device on the target host and compare the hash value to the hash value from the previously received report. A match in these hash values indicates that the state of the peripheral device was transferred successfully, indicating that the trusted virtual machine can trust and use the peripheral device.

Platforms must ensure the integrity of their TEEs in order to meet the security and privacy guarantees made to users. The approaches described herein also ensure the integrity of peripheral device migration through cryptographic verification using securely calculated and transferred hashes, preventing device compromise and significantly improving security.

The technical improvements provided by securely migrating trusted virtual machines and their peripheral devices, as described herein, may offer significant commercial advantages to hosting platform providers. For example, by ensuring enhanced security and data integrity for hosted customers, hosting platforms may significantly improve customer trust and confidence. Increased trust can lead to greater customer retention and acquisition, allowing the hosting platform provider to broaden its market share and customer base. Furthermore, by effectively reducing security risks and minimizing data compromises, hosting platforms may lower operational costs associated with data breaches, security remediation, and associated liabilities, thereby improving overall profitability.

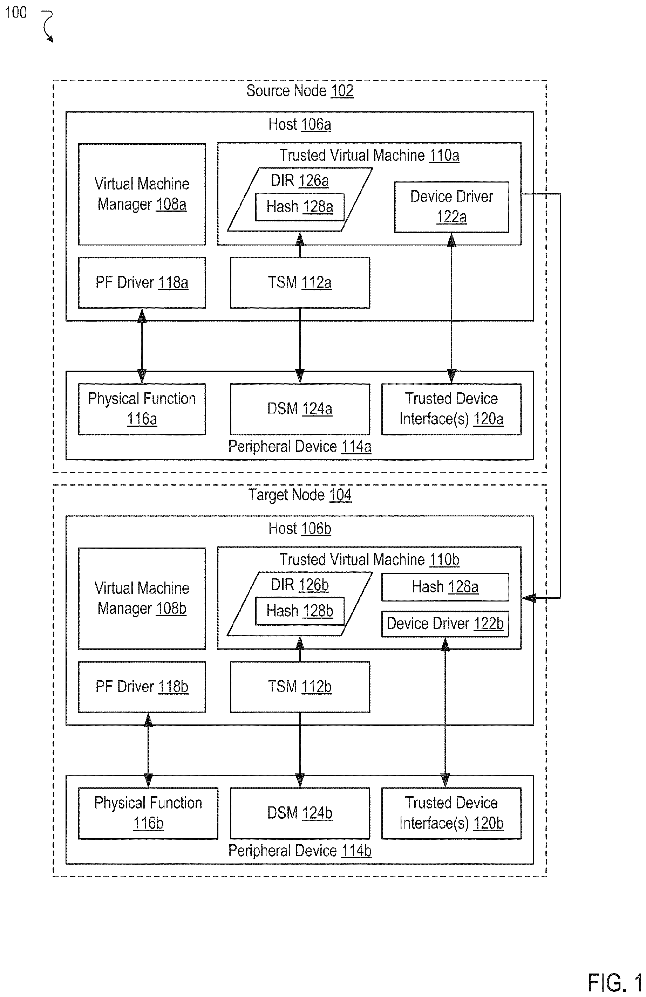

To begin, Fig. 1 sets forth a diagram of an example system 100 for secure peripheral device state transfer during trusted virtual machine migration in accordance with some embodiments of the present disclosure. The system 100 of Fig. 1 includes a source node 102 and a target node 104. The source node 102 and target node 104 may each include a computing system, or another allocation of hardware and software resources as can be appreciated. For example, in some embodiments, the source node 102 and the target node 104 may each include compute nodes in a cloud-based computing environment or other execution environment as can be appreciated. As will be described in further detail below, the source node 102 and target node 104 serve as a source and target for migrating an instance of a trusted virtual machine 110a. The source node 102 and target node 104 each include a host 106a,b, respectively. The hosts 106a,b are computers or systems in which the various software components described herein are executed.

The hosts 106a,b each include a respective virtual machine manager 108a,b. The virtual machine managers 108a,b are processes, services, and/or applications that perform resource allocation and system management functions for virtual machines executed in the hosts 106a,b. Particularly, the virtual machine managers 108a,b may perform resource allocation and system management functions for trusted virtual machines 110a,b. A trusted virtual machine 110a,b is any virtual machine implemented within a trusted execution environment. As described herein, a trusted execution environment is an area of a device that is isolated from the rest of the device so as to protect the data and applications therein from being compromised by actors or agents outside of the trusted execution environment. Thus, the data and applications stored and executed within a trusted virtual machine 110a,b are isolated from the rest of the host 106a,b.

For example, in some embodiments, the source node 102 and/or the target node 104 may be included in a platform or system that allows users to create and manage virtual machines to support their workloads or other tasks. In these examples, a trusted virtual machine 110a,b may be used to isolate data and applications from other tenants of the platform (e.g., from other virtual machines) and from the platform itself. In some embodiments, the trusted virtual machines 110a,b may include a Trusted Execution Environment (TEE) virtual machine as defined in the TEE Device Interface Security Protocol (TDISP) reference architecture.

The hosts 106a,b also each include a trusted security manager (TSM) 112a,b. A TSM 112a,b is process, service, or application within the Trusted Computing Base (TCB) of a trusted virtual machine 110a,b that enforces security policies on the host 106a,b so as to maintain a trusted execution environment. As described herein a TCB is a combination of hardware, firmware, and/or software, responsible for enforcing a security policy for trusted execution environment. Bugs or vulnerabilities occurring inside the TCB might jeopardize the security properties of the entire system. By contrast, parts of a computer system outside the TCB shall not be able to create a condition that would allow any more privileges than are granted to them in accordance with the security policy.

The source node 102 and target node 104 also each include a peripheral device 114a,b, respectively. The peripheral device 114a,b is a physical device coupled to the respective host 106a,b using an expansion bus or other interface as can be appreciated. In some embodiments, the peripheral device 114a,b includes a Peripheral Component Interface Express (PCIe) device or a device adhering to some other standard. The peripheral device 114a,b may include a variety of peripheral devices 114a,b including storage devices such as a Non-Volatile Memory Express (NVMe) storage device. The peripheral devices 114a,b are each considered to be included in the trusted execution environment of the source node 102 and target node 104, respectively.

The peripheral device 114a,b may execute various logical entities (e.g., processes, services, applications, and the like) to perform its functions. In some embodiments where the peripheral device 114a,b includes a PCIe device, the peripheral device 114a,b includes a Physical Function (PF) 116a,b. A PF 116a,b is a PCIe function that facilitates communications between a host 106a,b and the peripheral device 114a,b using PF drivers 118a,b on the host 106a,b. In some embodiments, a PF 116a,b facilitate exposing a controller of the peripheral device 114a,b. In some embodiments, the PF 116a,b enables virtualization and exposure of Trusted Device Interfaces (TDIs) 120a,b.

TDIs 120a,b are virtualized instances of peripheral adapters that serve as an interfaces for the peripheral device 114a,b. In some embodiments, systems such as a virtual machines or trusted virtual machines 110a,b may attach to these interfaces to use the peripheral device 114a,b. This allows each system (e.g., each virtual machine and/or trusted virtual machine 110a,b) to use the peripheral device 114a,b as if they were separate devices using virtualized interfaces and device drivers 122a,b for the peripheral device 114a,b stored in the respective system. Particularly, the TDIs 120a,b are interfaces that can be measured and reported on using TEE Device Interface Security Protocol (TDISP), to be described in further detail below. In some embodiments, the TDIs 120a,b may include PCIe Virtual Functions (VFs), Scalable Device Interfaces (SDIs), or other interfaces as can be appreciated. In some embodiments, the peripheral devices 114a,b also include Device Security Managers 124a,b, logical entities that enforce security policies on the peripheral device 114a,b so as to maintain trusted execution environments where applicable.

In the example system 100 of Fig. 1, assume that an instance of a trusted virtual machine 110a is executed in a source node 102 and is attached to one or more TDIs 120a of the peripheral device 114a. Further assume that the trusted virtual machine 110a is to be migrated from the source node 102 to the target node 104. In some embodiments, the peripheral device 114a stores data pertaining to the communications and shared operations of the peripheral device 114a with respect to the trusted virtual machine 110a, hereinafter referred to as "state information." In some embodiments, this state information may include sensitive or confidential information such as data, keys, memory maps, and the like. For example, in some embodiments where the peripheral device 114a includes a storage device such as an NVMe storage device, this state information may include a queue state for one or more queues of the peripheral device 114a. For example, a queue state may include data stored in queues for storage operations or administrative operations, head and tail pointers for these queues, buffered information, and the like. In some embodiments, this state information may include configuration settings for the peripheral device 114a. In some embodiments, this state information may include the firmware of the peripheral device 114a. In some embodiments, this state information may be defined with respect to different TDIs 120a such that each TDI 120a may have a corresponding portion of state information. In some embodiments, the state information for different TDIs 120a may at least partially overlap, such as state information including device settings, device firmware, and the like.

In some embodiments, migrating the trusted virtual machine 110a may include migrating this state information to the target node 104 for use by the peripheral device 114b. Existing implementations for migrating trusted virtual machines 114a,b allow for trusted virtual machines 114a,b, including their state and stored data, to be migrated using secure channels so as to maintain their integrity. In these implementations, the state information of peripheral devices 114a,b may be migrated but under the control of modules outside of the TCB of the trusted virtual machine 110a,b. Should this state information be compromised, such as by changing the values of pointers or the locations of buffers, the migrated virtual machine 110b may be vulnerable to attack. Accordingly, this state information should be protected during migration to comply with confidential computing practices.

Accordingly, in response to a command to migrate the trusted virtual machine 110a from the source node 102 to the target node 104, the virtual machine manager 108a may instruct the peripheral device 114a to calculate a hash 128a as a function of the state information. The hash 128a is a value calculated by applying a hash function, such as a cryptographic hash function, to the state information of the peripheral device 114a. Thus, the hash 128a reflects the state information of the peripheral device 114a at the time of migration. In some embodiments, where the state information is defined with respect to different TDIs 120a, a hash 128a may be calculated for each TDI 120a based on their respective state information.

Next, the virtual machine manager 108a may indicate, to the trusted virtual machine 110a, that it will be migrated. In response, the trusted virtual machine 110a requests, for each TDI 120a attached to the trusted virtual machine 110a, a TDISP Device Interface Report (DIR), shown as DIR 126a. In some embodiments, this may include the trusted virtual machine 110a requesting the DIR 126a from the TSM 112a. The TSM 112a may then request the DIR 126a from the DSM 124a via the host 106a. A DIR 126a is a report describing the status of a particular TDI 120a. Under TDISP, a DIR 126a may include arbitrary, user-defined data. Here, the DSM 124a may generate the DIR 126a to include the hash 128a of the state information of the peripheral device 114a (e.g., for the corresponding TDI 120a). Thus, the trusted virtual machine 110a may receive, for each attached TDI 120a, a corresponding DIR 126a and hash 128a.

The trusted virtual machine 110a then stores the hash 128a included in the received DIR(s) 126a. The trusted virtual machine 110a is then migrated to the target node 104 by the virtual machine manager 108a. In some embodiments, migrating the trusted virtual machine 110a from the source node 102 to the target node 104 may be performed according to any approach as can be appreciated that maintains the integrity and isolation of the trusted virtual machine 110a and its data. For example, in some embodiments, a snapshot of the trusted virtual machine 110a may be created and transferred to the target node 104. This migrated instance is shown as the trusted virtual machine 110b.

In some embodiments, migrating the trusted virtual machine 110a includes migrating the state information of the peripheral device 114a. For example, in some embodiments, the PF driver 118a may transfer the state information of the peripheral device 114a to the PF driver 118b of the target node 104. The PF driver 118b may then load this state information into the peripheral device 114b. Readers will appreciate that, in some embodiments, migrating the trusted virtual machine 110a, including the state information, may be performed using existing approaches or implementations, thereby allowing the approaches set forth herein to leverage existing protocols and systems without the need to change legacy migration logic. For example, though it may be possible to store the state information in the trusted virtual machine 110a prior to migration, this may raise additional technical and security concerns and may also go against industry standards. In contrast, the approaches set forth herein allow for state information to be transferred outside of the trusted virtual machine 110a, including using trusted or untrusted channels.

After the state information of the peripheral device 114a has been loaded into the peripheral device 114b, the peripheral device 114b calculates one or more hashes 128b as described above based on the loaded state information. Once execution of the trusted virtual machine 110b has been resumed in the target node 104, the trusted virtual machine 110b requests a DIR 126b for each TDI 120b using similar approaches as are set forth above. Each DIR 126b will include a corresponding hash 128b calculated based on the state information loaded into the peripheral device 114b.

Next, the trusted virtual machine 110b loads the hash(es) 128a stored in the trusted virtual machine 110a prior to migration. Each stored hash 128a is compared with its corresponding hash 128b received in a DIR 126b. Where each pair of hashes 128a,b matches, this indicates that the state information loaded into the peripheral device 114b is identical to the state information of the peripheral device 114a prior to migration. Thus, the state information was migrated and loaded into the peripheral device 114b without being modified. Accordingly, the trusted virtual machine 110b may trust and use the peripheral device 114b. This may include, for example, attaching to each TDI 120b.

Should any pair of hashes 128a,b fail to match, this indicates that some portion of the state information was compromised or otherwise modified. Accordingly, the trusted virtual machine 110b will not fully trust the TDI 120b and/or the peripheral device 114b. In some embodiments, this may cause an error or alert to be generated indicating a mismatch between the state information of the peripheral devices 114a,b. In some embodiments, this may cause migration and loading of this state information to be reattempted. In some embodiments, should migration and loading of this state information be reattempted, the peripheral device 114b may again calculate hashes 128b for comparison by the trusted virtual machine 110b to stored hashes 128a. In some embodiments, other remedial actions may also be taken in response to a mismatch between pairs of hashes 128a,b.

The approaches set forth above provide security for state information of peripheral devices 114a,b during migration of trusted virtual machines 110a,b using hashes 128a,b of state information included in DIRs 126a,b. Readers will appreciate that, in some embodiments, these approaches may also be applied to other use cases where untrusted agents (e.g., processes that cannot guarantee the integrity of TEEs) are used to handle or otherwise process state information of peripheral devices 114a,b. For example, in some embodiments, snapshots of trusted virtual machines 110a may be periodically created and stored for possible restoration later, such as part of a disaster recovery operation or for legal or regulatory compliance.

In some embodiments, creating a snapshot of a trusted virtual machine 110a may include requesting one or more DIRs 126a including hashes 128a as described above. These hashes 128a may be stored in the trusted virtual machine 110a for inclusion in the snapshot. State information for the peripheral device 114a at the time of the snapshot may also be stored. In order to restore the trusted virtual machine 110a from the snapshot, the stored state information may be loaded into a peripheral device 114b. The restored trusted virtual machine 110b may then request DIRs 126b and compare the included hashes 128b to the stored hashes 128a as described above. The restored virtual machine 110b may trust the peripheral device 114b should all pairs of hashes 128a,b match. Readers will appreciate that, in some embodiments, a trusted virtual machine 110a may be restored from a snapshot (e.g., as a trusted virtual machine 110b) in the same source node 102 that originally executed the trusted virtual machine 110a or restored to a different target node 104.

The approaches set forth above secure state information of peripheral devices 114a,b by leveraging existing TDISP features for DIRs 126a,b. This allows for these approaches to be used with existing systems and logic for migrating trusted virtual machines 110a,b and state information for peripheral devices 114a,b while improving overall system security. Particularly, the DIR 128a,b serves as a secure channel for transferring hashes 128a,b generated within a trusted execution environment so as to preserve their integrity. Readers will appreciate that, in some embodiments, other secure channels may also be used for transferring hashes 128a,b so long as those hashes 128a,b are generated within a trusted execution environment.

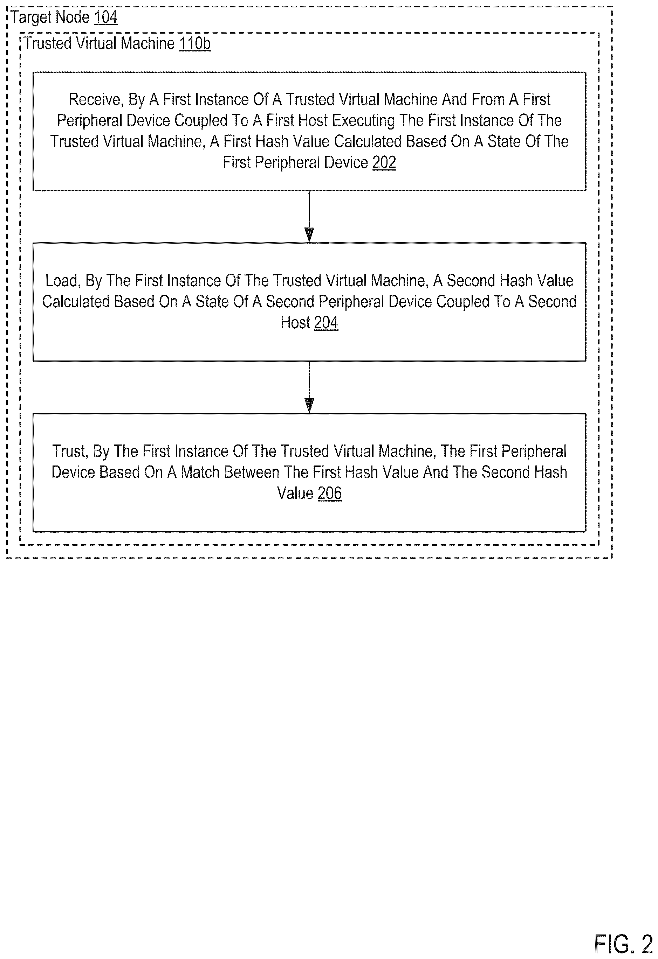

For further explanation, Fig. 2 sets forth a flowchart of an example method of secure peripheral device state transfer during trusted virtual machine migration in accordance with some embodiments of the present disclosure. The method of Fig. 2 may be performed, for example, by a target node 104 of Fig. 1. The method of Fig. 2 includes receiving 202, by a first instance of a trusted virtual machine 110b and from a first peripheral device 114b coupled to a first host 106b executing the first instance of the trusted virtual machine 110b, a first hash 128b value calculated based on a state of the first peripheral device 114b. In some embodiments, the first hash 128b may be included in a first Trusted Execution Environment (TEE) Device Interface Security Protocol (TDISP) Device Interface Report (DIR) 126b. In some embodiments, the first instance of the trusted virtual machine 110b may include an instance of a trusted virtual machine 110b migrated to the target node 104 from a source node 102. In some embodiments, the first instance of the trusted virtual machine 110b may include an instance of a trusted virtual machine 110b revived on the target node 104 from a snapshot generated on some other source node 102 or potentially the target node 104. Particularly, the first instance of the trusted virtual machine 110b is an instance of a trusted virtual machine 110b determining whether to trust the peripheral device 114b for use in a TEE including the first instance of the trusted virtual machine 110b.

The hash 128b value is a value calculated by applying a hash function to state information for the peripheral device 114b. In some embodiments, the state information for the peripheral device 114b includes data encoding one or more values stored used by the peripheral device 114b during its operation. In some embodiments, the particular data included in the state information may depend on the particular device type and function of the peripheral device 114b. For example, in some embodiments, where the peripheral device 114b includes a storage device such as an NVMe storage device, the state information may include values such as values stored in one or more queues of the storage device (e.g., storage operation queues, administrative operation queues), values for head and/or tail pointers for these queues, pointers and/or stored values for buffers, and the like. In some embodiments, the state information may include configuration settings for the peripheral device 114b. In some embodiments, the state information may include firmware for the peripheral device 114b, identifiers for the firmware for the peripheral device 114b, hash values or other derivative values based on the firmware for the peripheral device 114b, or other data related to the firmware of the peripheral device 114b as can be appreciated.

In some embodiments, this state information may include state information generated by another peripheral device 114a and migrated to the target node 104 as part of migrating the trusted virtual machine 110b from a source node 102 (e.g., as an instance of a trusted virtual machine 110a executed in the source node 102). Accordingly, in some embodiments, this state information may be loaded into the peripheral device 114b as part of this migration process. In some embodiments, the hash 128b value may be generated after or in response to loading this state information into the peripheral device 114b and stored for later inclusion in a DIR 126b. In some embodiments, the hash 128b value may be generated in response to a request for the DIR 126b from the trusted virtual machine 110b.

In some embodiments, receiving 202 the first hash 128b may be performed in response to a request from the first instance of the trusted virtual machine 110b for the first TDISP DIR 126b. For example, in some embodiments, the first instance of the trusted virtual machine 110b may request the first TDISP DIR 126b from the first peripheral device 114b in response to a command or signal from a virtual machine manager 108b indicating that the first instance of the trusted virtual machine 110b is resuming execution. In some embodiments, the first instance of the trusted virtual machine 110b may request the first TDISP DIR 126b via a TSM 112b, which then receives the first TDISP DIR 126b from the DSM 124b of the first peripheral device 114b.

The method of Fig. 2 also includes loading 204, by the first instance of the trusted virtual machine 110b, a second hash 128a value calculated based on a state of a second peripheral device 114a coupled to a second host 106a. In some embodiments, the second hash 128a value may be stored by a second instance of the trusted virtual machine 110a as executed in the second host 106a. For example, the second hash 128a value may be calculated by the second peripheral device 114a and provided in a DIR 126a to the second instance of the trusted virtual machine 110a for storage therein. After migrating the second instance of the trusted virtual machine 110a into the target node 104, executed as a first instance of the trusted virtual machine 110b, the previously calculated second hash 128a value will be stored in storage of the first instance of the trusted virtual machine 110b. Thus, the second instance of the trusted virtual machine 110a can load 204 this second hash 128b value from storage.

The method of Fig. 2 also includes trusting 206, by the first instance of the trusted virtual machine 110b, the first peripheral device 114b based on a match between the first hash 128b value and the second hash 128a value. The first hash 128b value reflects and is calculated based on the state information loaded into the first peripheral device 114b (e.g., as part of the migration or restoration process). The second hash 128a value reflects and is calculated based on the state information of the second peripheral device 114a and stored into a first instance of the trusted virtual machine 110a (e.g., prior to migration or snapshotting). Thus, a match between the first hash 128b value and the second hash 128a value indicates that the state of the second peripheral device 114a matches the state of the first peripheral device 114b. For example, a match between the first hash 128b value and the second hash 128a value indicates that the state of the second peripheral device 114a before migration matches the state of the first peripheral device 114b after migration. Thus, the first peripheral device 114b can be trusted 206 by the first instance of the trusted virtual machine 110b where the first hash 128b value and the second hash 128a match.

In some embodiments, trusting 206, by the first instance of the trusted virtual machine 110b, the first peripheral device 114b allows the first instance of the trusted virtual machine 110b to use the first peripheral device 114b while maintaining a TEE. In some embodiments, trusting 206, by the first instance of the trusted virtual machine 110b, the first peripheral device 114b includes logically or operatively coupling the first instance of the trusted virtual machine 110b with the first peripheral device 114b. For example, in some embodiments, trusting 206, by the first instance of the trusted virtual machine 110b, the first peripheral device 114b includes attaching the first instance of the trusted virtual machine 110b to a TDI 120b of the peripheral device 114b or some other logical controller or interface of the peripheral device 114b. For example, where the hash 128b value is included in a DIR 126b for a particular TDI 120b, trusting 206, by the first instance of the trusted virtual machine 110b, the first peripheral device 114b may include attaching the first instance of the trusted virtual machine 110b to the particular TDI 120b corresponding to the DIR 126b and hash 128b value. Other approaches may also be used when trusting 206, by the first instance of the trusted virtual machine 110b, the first peripheral device 114b.

In some embodiments, a mismatch between the first hash 128b value and the second hash 128a indicates that the state of the second peripheral device 114a does not match the state of the first peripheral device 114b. For example, a mismatch between the first hash 128b value and the second hash 128a value indicates that the state of the second peripheral device 114a before migration does not match the state of the first peripheral device 114b after migration. This mismatch may be due to various reasons. For example, a mismatch may indicate that the state information migrated and loaded into the peripheral device 114b was modified prior to loading. As another example, a mismatch may indicate that the firmware of the peripheral device 114b has been modified. As these may indicate a potential attack or compromise of the first peripheral device 114b, the peripheral device 114b should not be trusted 206 so as to maintain the TEE of the trusted virtual machine 110b. Accordingly, rather than trust 206 the first peripheral device 114b, various remedial actions may be taken in response to a mismatch between the first hash 128b value and the second hash 128a.

For example, in some embodiments, an alert, notification, or other signal may be generated indicating the mismatch. As another example, in some embodiments, migrating state information from the second peripheral device 114a to the first peripheral device 114b may be reattempted. As a further example, as potentially multiple virtual machines, hosts 106b, and/or trusted virtual machines 110b may have access to the peripheral device 114b, logical or operative coupling between these systems and the peripheral device 114b may be severed so as to protect them from attack vectors potentially exposed by the peripheral device 114b. In some embodiments, other remedial actions may also be performed.

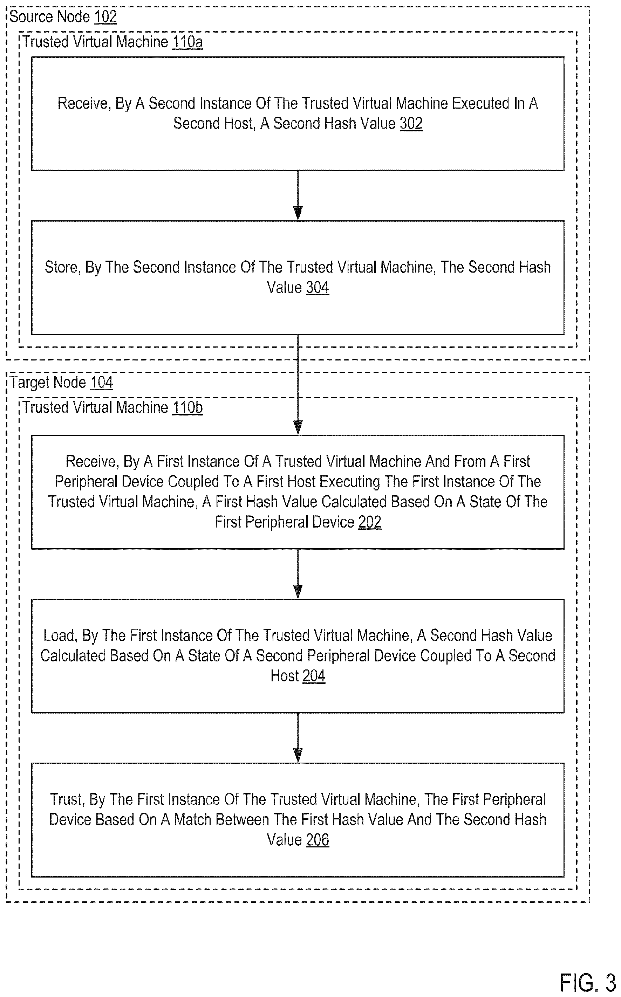

For further explanation, Fig. 3 sets forth a flowchart of another example method of secure peripheral device state transfer during trusted virtual machine migration in accordance with some embodiments of the present disclosure. The method of Fig. 3 is similar to Fig. 2, differing in that the method of Fig. 3 also includes receiving 302, by a second instance of the trusted virtual machine 110a executed in a second host 106a, a second hash 128a value. In some embodiments, the second hash value 128b is included in a second TDISP Device Interface Report (DIR) 126a. The second hash 128a value is calculated based on state information of a second peripheral device 116a of a source node 102 using similar approaches as are set forth above with respect to the first hash 128b value. The second hash 128a value may then be included in a second TDISP DIR 126a provided to the second instance of the trusted virtual machine 110a. For example, in some embodiments, the second instance of the trusted virtual machine 110a may request the second TDISP DIR 126a in response to a command or signal from a virtual machine manager 108a that the second instance of the trusted virtual machine 110a will be migrated, snapshot, or subject to some other action.

The method of Fig. 3 also includes storing 304, by the second instance of the trusted virtual machine 110a, the second hash 128a value. In some embodiments, storing 304 the second hash 128a value includes storing 304 the second hash 128a value in memory of the second instance of the trusted virtual machine 110a. Thus, in some embodiments, after the second instance of the trusted virtual machine 110a has been migrated or restored as the first instance of the trusted virtual machine 110b, the second hash 128a value will be available for loading 204 as is set forth above.

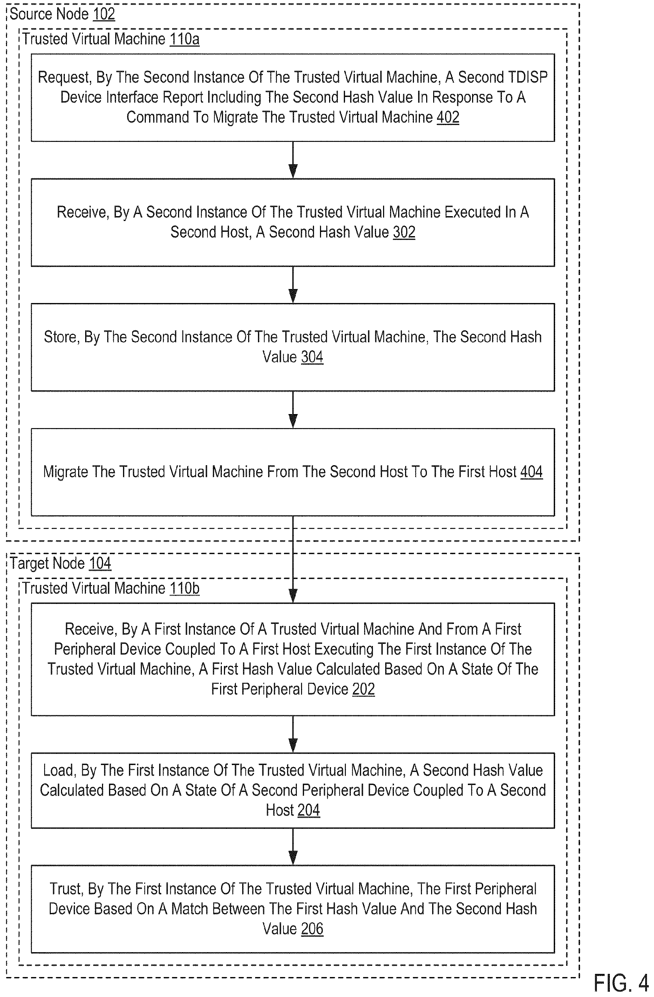

For further explanation, Fig. 4 sets forth a flowchart of another example method of secure peripheral device state transfer during trusted virtual machine migration in accordance with some embodiments of the present disclosure. The method of Fig. 4 is similar to Fig. 3, differing in that the method of Fig. 4 includes requesting 402, by the second instance of the trusted virtual machine 110a, a second TDISP Device Interface Report (DIR) 126a comprising the second hash value 128a in response to a command to migrate the trusted virtual machine 110a. In some embodiments, the virtual machine manager 108a may provide a command to the second instance of the trusted virtual machine 110a indicating that the trusted virtual machine 110a will be migrated. In some embodiments, in response to this command, the second instance of the trusted virtual machine 110a may request 402 a DIR 126a from the second peripheral device 114a. This allows the second instance of the trusted virtual machine 110a to store 304 the second hash 128a value included in the DIR 126a for use after migration.

The method of Fig. 4 also includes migrating 404 the trusted virtual machine 110a from the second host 106a to the first host 106b. Migrating 404 the trusted virtual machine 110a may be performed according to any approach as would be understood by one skilled in the art that preserves the TEE of the trusted virtual machine 110a. Once migrated 404, the trusted virtual machine 110a may be revived and executed in the first host 106b as the first instance of the trusted virtual machine 110b.

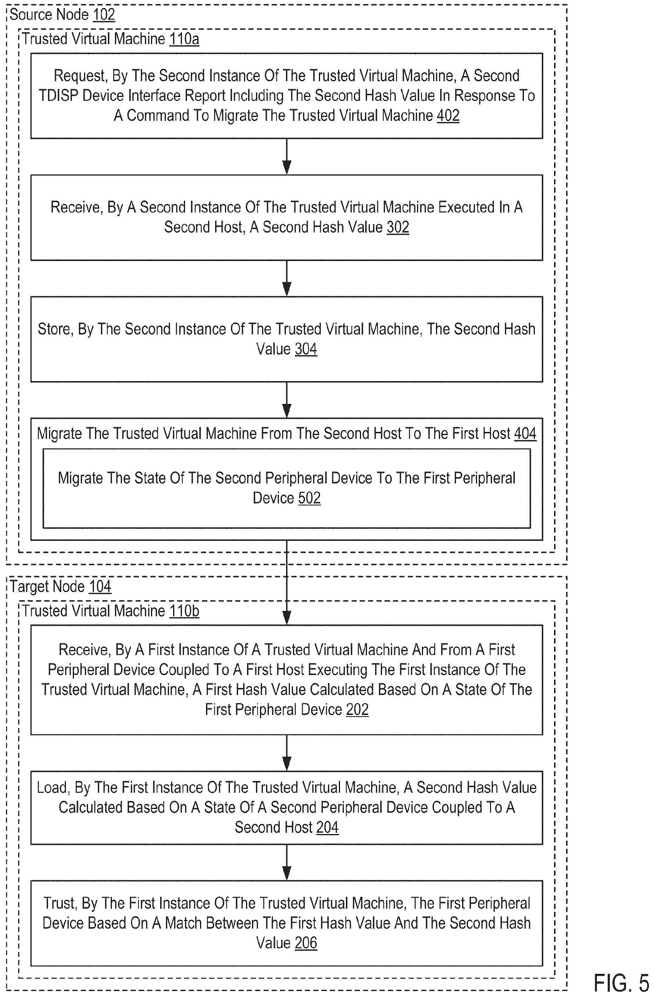

For further explanation, Fig. 5 sets forth a flowchart of another example method of secure peripheral device state transfer during trusted virtual machine migration in accordance with some embodiments of the present disclosure. The method of Fig. 5 is similar to Fig. 4, differing in that migrating 404 the trusted virtual machine 110a from the second host 106a to the first host 106b includes migrating 502 the state of the second peripheral device 114a to the first peripheral device 114b. In some embodiments, the state of the second peripheral device 114a may be encoded as state information as described above. Accordingly, in some embodiments, migrating 502 the state of the second peripheral device 114a may include migrating state information encoding the state of the second peripheral device 114a from the source node 102 to the target node 104.

Migrating state information from the source node 102 to the target node 104 may be performed according to any approach as would be understood by one skilled in the art. Particularly, the state information may be migrated using trusted, secure channels or potentially untrusted and/or insecure channels. As the integrity of the state information will be subsequently verified by comparing hash 128a,b values as described above, it may not be necessary to migrate the state information using a trusted, secure channel to preserve the TEE of the trusted virtual machine 110a,b. After this state information has been migrated from the source node 102 to the target node 104, the state information may be installed or loaded into the first peripheral device 114b for use.

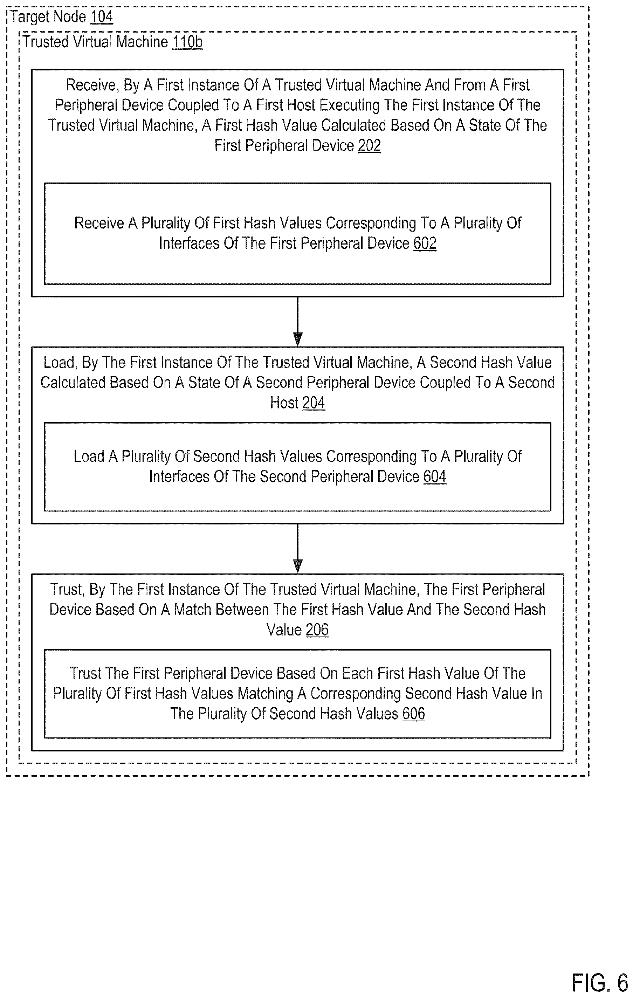

For further explanation, Fig. 6 sets forth a flowchart of another example method of secure peripheral device state transfer during trusted virtual machine migration in accordance with some embodiments of the present disclosure. The method of Fig. 6 is similar to Fig. 2, differing in that receiving 202 the first hash 128b includes receiving 602 a plurality of first hash 128b values corresponding to a plurality of interfaces of the first peripheral device 114b. In some embodiments, a peripheral device 114a,b may have multiple attached TDIs 120a,b. In some embodiments, a request for a DIR 126a,b may be directed to a particular TDI 120a,b so as to receive a report based on the particular TDI 120a,b. Accordingly, where the first peripheral device 114b includes multiple TDIs 120b, the first instance of the trusted virtual machine 110b may request a DIR 126b from each TDI 120b of the first peripheral device 114b. Multiple TDIs 120b may then be received in response, with each TDI 120b including a hash 128b value of multiple hash 128b values.

The method of Fig. 6 further differs from Fig. 2 in that loading 204, by the first instance of the trusted virtual machine 110b, a second hash 128a value calculated based on a state of a second peripheral device 114a coupled to a second host 106a includes loading 604 a plurality of second hash 128a values corresponding to a plurality of interfaces of the second peripheral device 114a. As the first and second peripheral devices 114a each include multiple TDIs 120a,b, rather than store a single hash 128a (e.g., prior to migration), the second instance of the trusted virtual machine 110a will request a DIR 126a for each TDI 120a and store their included hashes 128a for later use. After the trusted virtual machine 110a,b is revived in the target node 104 as the first instance of the trusted virtual machine 110b, these stored hashes 128a may be loaded 604 from storage.

The method of Fig. 6 further differs from Fig. 2 in that trusting 206, by the first instance of the trusted virtual machine 110b, the first peripheral device 114b based on a match between the first hash 128b value and the second hash 128a value also includes trusting 606 the first peripheral device 114b based on each first hash 128b value of the plurality of first hash 128b values matching a corresponding second hash 128a value in the plurality of second hash 128a values. In other words, each first hash 128b value is compared to its corresponding second hash 128a value (e.g., corresponding to the same TDI 120a,b). In some embodiments, the first peripheral device 114b may be trusted 606 where each pair of hashes 128a,b matches. In some embodiments, should there be a mismatch in any pair of hashes 128a,b the first peripheral device 114b may not be trusted.

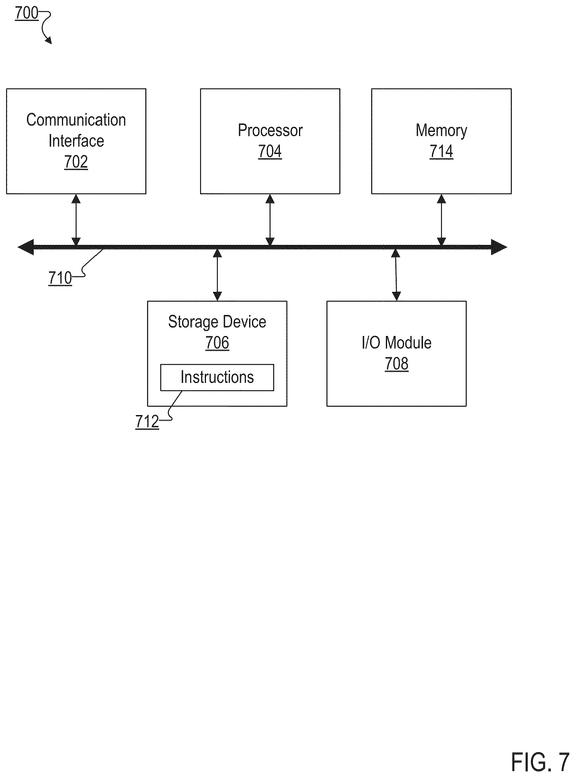

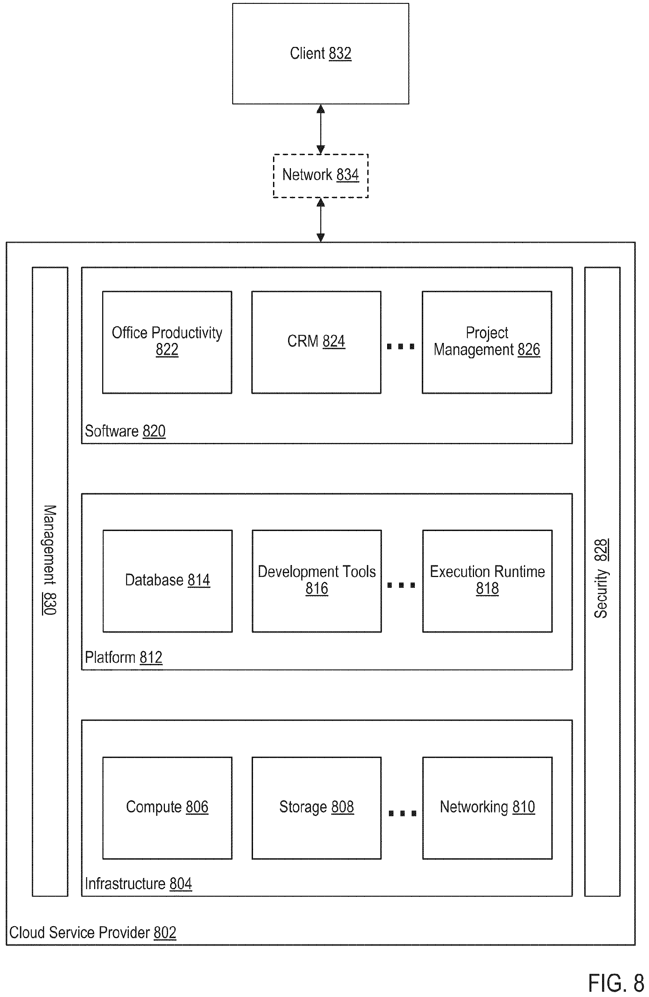

For further explanation, the sections included below provide some details regarding technologies that may be used to support secure peripheral device state transfer during trusted virtual machine migration in accordance with some embodiments. For example, Fig. 7 sets forth an example of a computing device that may be used for some portion of securing an operating system in accordance with some embodiments. As an additional example of technologies that may be used to support secure peripheral device state transfer during trusted virtual machine migration, Fig. 8 sets forth a block diagram of a cloud service provider 802 service architecture in accordance with some embodiments of the present disclosure.

For further explanation, Fig. 7 illustrates an exemplary computing device 700 that may be specifically configured to perform one or more of the processes described herein. As shown in Fig. 7, computing device 700 may include a communication interface 702, a processor 704, a storage device 706, an input/output (I/O) module 708, and computer memory 714 communicatively connected one to another via a communication infrastructure 710. While an exemplary computing device 700 is shown in Fig. 7, the components illustrated in Fig. 7 are not intended to be limiting. Additional or alternative components may be used in other embodiments. Components of computing device 700 shown in Fig. 7 will now be described in additional detail.

Communication interface 702 may be configured to communicate with one or more computing devices. Examples of communication interface 702 include, without limitation, a wired network interface (such as a network interface card), a wireless network interface (such as a wireless network interface card), a modem, an audio/video connection, and any other suitable interface.

Processor 704 generally represents any type or form of processing unit capable of processing data and/or interpreting, executing, and/or directing execution of one or more of the instructions, processes, and/or operations described herein. Processor 704 may perform operations by executing computer-executable instructions 712 (e.g., an application, software, code, and/or other executable data instance) stored in storage device 706.

Storage device 706 may include one or more data storage media, devices, or configurations and may employ any type, form, and combination of data storage media and/or device. For example, storage device 706 may include, but is not limited to, any combination of non-volatile media and/or volatile media. Electronic data, including data described herein, may be temporarily and/or permanently stored in storage device 706. For example, data representative of computer-executable instructions 712 configured to direct processor 704 to perform any of the operations described herein may be stored within storage device 706. In some examples, data may be arranged in one or more databases residing within storage device 706.

I/O module 708 may include one or more I/O modules configured to receive user input and provide user output. I/O module 708 may include any hardware, firmware, software, or combination thereof supportive of input and output capabilities. For example, I/O module 708 may include hardware and/or software for capturing user input, including, but not limited to, a keyboard or keypad, a touchscreen component (e.g., touchscreen display), a receiver (e.g., an RF or infrared receiver), motion sensors, and/or one or more input buttons.

I/O module 708 may include one or more devices for presenting output to a user, including, but not limited to, a graphics engine, a display (e.g., a display screen), one or more output drivers (e.g., display drivers), one or more audio speakers, and one or more audio drivers. In certain embodiments, I/O module 708 is configured to provide graphical data to a display for presentation to a user. The graphical data may be representative of one or more graphical user interfaces and/or any other graphical content as may serve a particular implementation. In some examples, any of the systems, computing devices, and/or other components described herein may be implemented by computing device 700.

For further explanation and as an additional example of a supporting technology for secure peripheral device state transfer during trusted virtual machine migration, Fig. 8 sets forth a block diagram of a cloud service provider service architecture in accordance with some embodiments. The cloud service provider 802 can deliver a variety of resources through a services-based consumption model where resources are consumed on-demand and as-a-service. Cloud service providers can provide services via cloud platforms such as, for example, Microsoft Azure^{™}, Amazon Web Services ('AWS')^{™}, Google Cloud Platform ('GCP')^{™}, and others. In Fig. 8, the cloud service provider 802 is accessed from a client device 834 via a network 832.

Fig. 8 depicts an embodiment where software 820 is delivered as a service. Software-as-a-service ('SaaS') is a model where software applications are delivered over the internet as-a-service. Rather than installing and maintaining software locally, users can access software via a web browser or other network connected interface, eliminating the need for complex software and hardware management on the client-side. In Fig. 8, as examples of software 820 that can be delivered as-a-service, the illustrated embodiment includes office productivity 822 software, customer relationship management ('CRM') 824 software, and project management 826 software. The office productivity 822 software can include applications designed to facilitate common business and personal tasks, including word processing applications, applications for spreadsheet creation, presentation design applications, and many others. The CRM 824 software can include applications for managing a business organization's relationships and interactions with customers and potential customers. The project management 826 software can include applications designed to help teams plan, organize, and manage projects efficiently by facilitating collaboration and tracking the progress of projects. Readers will appreciate that in other embodiments, other types of software may be delivered using a SaaS model.

Fig. 8 depicts an embodiment where platforms 812 can be delivered as a service. Platform-as-a-service ('PaaS') is a model that provides cloud customers with platform resources that they can use to develop, run, and manage applications without the complexity of such deploying and managing such infrastructure on their own. In Fig. 8, as examples of platform 812 resources that can be delivered as-a-service, the illustrated embodiment includes database 814 services, development tools 816 services, and execution runtime 818 services. The database 814 services can be used to provide access to databases without management overhead for the user as the cloud service provider manages the provisioning, scaling, and maintenance of the databases. The development tools 816 services can provide developers with tools to design, develop, test, and deploy applications without needing to manage the underlying infrastructure. The execution runtime 818 services can provide environments where applications or other forms of computer program code can be executed, including services to scale the execution environment. Readers will appreciate that in other embodiments, other platform resources may be delivered using a PaaS model.

Fig. 8 depicts an embodiment where infrastructure 804 can be delivered as a service. Infrastructure-as-a-Service ('IaaS') is a model that provides virtualized computing resources over the internet, such that infrastructure such as servers, storage, networks, and others may be leased on demand rather than purchasing and maintaining physical hardware. In Fig. 8, as examples of infrastructure 804 resources that can be delivered as-a-service, the illustrated embodiment includes compute 806 services, storage 808 services, and networking 810 services. The compute 806 services can be used to provide on-demand access to computational resources such as VMs, containers, and serverless functions, where the cloud service provider manages the provisioning, scaling, and maintenance of such resources. The storage 808 services can provide storage resources that can be used to store and access data, without the need for customers to purchase and manage on-premises physical storage resources. The networking 810 services can provide the ability to create and manage virtualized networking resources such as, for example, virtual private networks ('VPNs'), firewalls, load balancers, and more. Readers will appreciate that in other embodiments, other infrastructure resources may be delivered using a PaaS model.

The cloud service provider of Fig. 8 also provides management 830 resources. The management 830 resources can include, for example, tools and interfaces that enable customers to efficiently deploy, monitor, and manage, their cloud services. Such tools can include web-based management consoles, command-line interfaces ('CLIs'), APIs, automation tools, and other tools.

The cloud service provider of Fig. 8 also provides security 828 resources. The security 828 resources can include, for example, tools and services to help customers protect their cloud environments and ensure compliance with security standards. These tools and services may provide specific aspects of security, including identity and access management, network security, threat detection, compliance management, and others.

Readers will appreciate that many of the components described above may be delivered as services from a cloud service provider. For example, the virtual machines, containers, and pods described above may all be delivered via a cloud service provider. In other embodiments, other forms of compute resources may be used in place of the virtual machines or other compute resource. For example, AWS EC2 instances or other form of cloud compute instances may be utilized in place of the virtual machines.

Advantages and features of the present disclosure can be further described by the following statements:
1. A method of secure peripheral device state transfer during trusted virtual machine migration, comprising: receiving, by a first instance of a trusted virtual machine and from a first peripheral device coupled to a first host executing the first instance of the trusted virtual machine, a first hash value calculated in a trusted execution environment of the first host and based on a state of the first peripheral device; loading, by the first instance of the trusted virtual machine, a second hash value calculated based on a state of a second peripheral device coupled to a second host; and trusting, by the first instance of the trusted virtual machine, the first peripheral device based on a match between the first hash value and the second hash value.
2. The method of statement 1, wherein the first hash value is included in a first Trusted Execution Environment (TEE) Device Interface Security Protocol (TDISP) Device Interface Report.
3. The method of statements 1 or 2, further comprising: receiving, by a second instance of the trusted virtual machine executed in a second host, a second hash value; and storing, by the second instance of the trusted virtual machine, the second hash value.
4. The method of any combination of one or more of statements 1-3, further comprising: requesting, by the second instance of the trusted virtual machine, a second TDISP Device Interface Report comprising the second hash value in response to a command to migrate the trusted virtual machine; and migrating the trusted virtual machine from the second host to the first host.
5. The method of any combination of one or more of statements 1-4, wherein migrating the trusted virtual machine from the second host to the first host comprises migrating the state of the second peripheral device to the first peripheral device.
6. The method of any combination of one or more of statements 1-5: wherein receiving the first hash value comprises receiving a plurality of first hash values corresponding to a plurality of interfaces of the first peripheral device; wherein loading the second hash value comprises loading a plurality of second hash values corresponding to a plurality of interfaces of the second peripheral device; and wherein trusting the first peripheral device comprises trusting the first peripheral device based on each first hash value of the plurality of first hash values matching a corresponding second hash value in the plurality of second hash values.
7. The method of any combination of one or more of statements 1-6, wherein the first hash value is calculated based on a configuration state of the first peripheral device and the second hash value is calculated based on a configuration state of the second peripheral device.
8. An apparatus for secure peripheral device state transfer during trusted virtual machine migration, comprising: a memory; and one or more processing devices, operatively coupled to the memory, the one or more processing devices configured to: receive, by a first instance of a trusted virtual machine and from a first peripheral device coupled to a first host executing the first instance of the trusted virtual machine, a first hash value calculated in a trusted execution environment of the first host and based on a state of the first peripheral device; load, by the first instance of the trusted virtual machine, a second hash value calculated based on a state of a second peripheral device coupled to a second host; and trust, by the first instance of the trusted virtual machine, the first peripheral device based on a match between the first hash value and the second hash value.
9. The apparatus of statement 8, wherein the first hash value is included in a first Trusted Execution Environment (TEE) Device Interface Security Protocol (TDISP) Device Interface Report.
10. The apparatus of statements 8 or 9, wherein the one or more processing devices are further configured to: receive, by a second instance of the trusted virtual machine executed in a second host, a second hash value; and store, by the second instance of the trusted virtual machine, the second hash value.
11. The apparatus of any combination of one or more of statements 8-10, wherein the one or more processing devices are further configured to: request, by the second instance of the trusted virtual machine, a second TDISP Device Interface Report comprising the second hash value in response to a command to migrate the trusted virtual machine; and migrate the trusted virtual machine from the second host to the first host.
12. The apparatus of any combination of one or more of statements 8-11, wherein migrating the trusted virtual machine from the second host to the first host comprises migrating the state of the second peripheral device to the first peripheral device.
13. The apparatus of any combination of one or more of statements 8-12: wherein, to receive the first hash value, the one or more processing devices are further configured to receive a plurality of first hash values corresponding to a plurality of interfaces of the first peripheral device; wherein, to load the second hash value, the one or more processing devices are further configured to load a plurality of second hash values corresponding to a plurality of interfaces of the second peripheral device; and wherein, to trust the first peripheral device, the one or more processing devices are further configured to trust the first peripheral device based on each first hash value of the plurality of first hash values matching a corresponding second hash value in the plurality of second hash values.
14. The apparatus of any combination of one or more of statements 8-13, wherein the first hash value is calculated based on a configuration state of the first peripheral device and the second hash value is calculated based on a configuration state of the second peripheral device.
15. A non-transitory computer readable storage medium storing instructions which, when executed, cause a processing device to: receive, by a first instance of a trusted virtual machine and from a first peripheral device coupled to a first host executing the first instance of the trusted virtual machine, a first hash value calculated in a trusted execution environment of the first host and based on a state of the first peripheral device; load, by the first instance of the trusted virtual machine, a second hash value calculated based on a state of a second peripheral device coupled to a second host; and trust, by the first instance of the trusted virtual machine, the first peripheral device based on a match between the first hash value and the second hash value.
16. The non-transitory computer readable storage medium of statement 15, wherein the first hash value is included in a first Trusted Execution Environment (TEE) Device Interface Security Protocol (TDISP) Device Interface Report
17. The non-transitory computer readable storage medium of statements 15 or 16, wherein the instructions, when executed, further cause the processing device to: receive, by a second instance of the trusted virtual machine executed in a second host, a second hash value; and store, by the second instance of the trusted virtual machine, the second hash value.
18. The non-transitory computer readable storage medium of any combination of one or more of statements 15-17, wherein the instructions, when executed, further cause the processing device to: request, by the second instance of the trusted virtual machine, a second TDISP Device Interface Report comprising the second hash value in response to a command to migrate the trusted virtual machine; and migrate the trusted virtual machine from the second host to the first host.
19. The non-transitory computer readable storage medium of any combination of one or more of statements 15-18: wherein, to receive the first hash value, the instructions, when executed, further cause the processing device to receive a plurality of first hash values corresponding to a plurality of interfaces of the first peripheral device; wherein, to load the second hash value, the instructions, when executed, further cause the processing device to load a plurality of second hash values corresponding to a plurality of interfaces of the second peripheral device; and wherein, to trust the first peripheral device, the instructions, when executed, further cause the processing device to trust the first peripheral device based on each first hash value of the plurality of first hash values matching a corresponding second hash value in the plurality of second hash values.
20. The non-transitory computer readable storage medium of any combination of one or more of statements 15-19, wherein, to migrate the trusted virtual machine from the second host to the first host, the instructions, when executed, further cause the processing device to migrate the state of the second peripheral device to the first peripheral device.

Although some embodiments are described largely in the context of a system, method, or in some other way, readers will recognize that embodiments of the present disclosure may also take the form of a computer program product disposed upon computer readable storage media for use with any suitable processing system. Such computer readable storage media may be any storage medium for machine-readable information, including magnetic media, optical media, solid-state media, or other suitable media. Examples of such media include magnetic disks in hard drives or diskettes, compact disks for optical drives, magnetic tape, and others as will occur to those of skill in the art. Persons skilled in the art will immediately recognize that any computer system having suitable programming means will be capable of executing the steps described herein as embodied in a computer program product. Persons skilled in the art will recognize also that, although some of the embodiments described in this specification are oriented to software installed and executing on computer hardware, nevertheless, alternative embodiments implemented as firmware or as hardware are well within the scope of the present disclosure.

Readers will appreciate that some embodiments are described in which computer program instructions are executed on computer hardware such as, for example, one or more computer processors. Readers will appreciate that in other embodiments, computer program instructions may be executed on virtualized computer hardware (e.g., one or more virtual machines), in one or more containers, in one or more cloud computing instances (e.g., one or more AWS EC2 instances), in one or more serverless compute instances offered such as those offered by a cloud services provider, in one or more event-driven compute services such as those offered by a cloud services provider, or in some other execution environment.

In some examples, a non-transitory computer-readable medium storing computer-readable instructions may be provided in accordance with the principles described herein. The instructions, when executed by a processor of a computing device, may direct the processor and/or computing device to perform one or more operations, including one or more of the operations described herein. Such instructions may be stored and/or transmitted using any of a variety of known computer-readable media.

A non-transitory computer-readable medium as referred to herein may include any non-transitory storage medium that participates in providing data (e.g., instructions) that may be read and/or executed by a computing device (e.g., by a processor of a computing device). For example, a non-transitory computer-readable medium may include, but is not limited to, any combination of non-volatile storage media and/or volatile storage media. Exemplary non-volatile storage media include, but are not limited to, read-only memory, flash memory, a solid-state drive, a magnetic storage device (e.g., a hard disk, a floppy disk, magnetic tape, etc.), ferroelectric random-access memory ("RAM"), and an optical disc (e.g., a compact disc, a digital video disc, a Blu-ray disc, etc.). Exemplary volatile storage media include, but are not limited to, RAM (e.g., dynamic RAM).

One or more embodiments may be described herein with the aid of method steps illustrating the performance of specified functions and relationships thereof. The boundaries and sequence of these functional building blocks and method steps have been arbitrarily defined herein for convenience of description. Alternate boundaries and sequences can be defined so long as the specified functions and relationships are appropriately performed. Any such alternate boundaries or sequences are thus within the scope and spirit of the claims. Further, the boundaries of these functional building blocks have been arbitrarily defined for convenience of description. Alternate boundaries could be defined as long as the certain significant functions are appropriately performed. Similarly, flow diagram blocks may also have been arbitrarily defined herein to illustrate certain significant functionality.

To the extent used, the flow diagram block boundaries and sequence could have been defined otherwise and still perform the certain significant functionality. Such alternate definitions of both functional building blocks and flow diagram blocks and sequences are thus within the scope and spirit of the claims. One of average skill in the art will also recognize that the functional building blocks, and other illustrative blocks, modules and components herein, can be implemented as illustrated or by discrete components, application specific integrated circuits, processors executing appropriate software and the like or any combination thereof.

While particular combinations of various functions and features of the one or more embodiments are expressly described herein, other combinations of these features and functions are likewise possible. The present disclosure is not limited by the particular examples disclosed herein and expressly incorporates these other combinations.

## Claims

1. A method of secure peripheral device state transfer during trusted virtual machine migration, comprising:
receiving, by a first instance of a trusted virtual machine and from a first peripheral device coupled to a first host executing the first instance of the trusted virtual machine, a first hash value calculated in a trusted execution environment of the first host and based on a state of the first peripheral device;
loading, by the first instance of the trusted virtual machine, a second hash value calculated based on a state of a second peripheral device coupled to a second host; and
trusting, by the first instance of the trusted virtual machine, the first peripheral device based on a match between the first hash value and the second hash value.

2. The method of claim 1, wherein the first hash value is included in a first Trusted Execution Environment (TEE) Device Interface Security Protocol (TDISP) Device Interface Report.

3. The method of claim 1 or 2, at least one of:
further comprising:
receiving, by a second instance of the trusted virtual machine executed in a second host, the second hash value; and
storing, by the second instance of the trusted virtual machine, the second hash value;
wherein:
receiving the first hash value comprises receiving a plurality of first hash values corresponding to a plurality of interfaces of the first peripheral device;
loading the second hash value comprises loading a plurality of second hash values corresponding to a plurality of interfaces of the second peripheral device; and
trusting the first peripheral device comprises trusting the first peripheral device based on each first hash value of the plurality of first hash values matching a corresponding second hash value in the plurality of second hash values; and
wherein the first hash value is calculated based on a configuration state of the first peripheral device and the second hash value is calculated based on a configuration state of the second peripheral device.

4. The method of claim 2, further comprising:
requesting, by the second instance of the trusted virtual machine, a second TDISP Device Interface Report comprising the second hash value in response to a command to migrate the trusted virtual machine; and
migrating the trusted virtual machine from the second host to the first host, preferably wherein migrating the trusted virtual machine from the second host to the first host comprises migrating the state of the second peripheral device to the first peripheral device.

5. An apparatus for secure peripheral device state transfer during trusted virtual machine migration, comprising:
a memory; and
one or more processing devices, operatively coupled to the memory, the one or more processing devices configured to:
receive, by a first instance of a trusted virtual machine and from a first peripheral device coupled to a first host executing the first instance of the trusted virtual machine, a first hash value calculated in a trusted execution environment of the first host and based on a state of the first peripheral device;
load, by the first instance of the trusted virtual machine, a second hash value calculated based on a state of a second peripheral device coupled to a second host; and
trust, by the first instance of the trusted virtual machine, the first peripheral device based on a match between the first hash value and the second hash value.

6. The apparatus of claim 5, wherein the first hash value is included in a first Trusted Execution Environment (TEE) Device Interface Security Protocol (TDISP) Device Interface Report.

7. The apparatus of claim 6, wherein the one or more processing devices are further configured to:
request, by the second instance of the trusted virtual machine, a second TDISP Device Interface Report comprising the second hash value in response to a command to migrate the trusted virtual machine; and
migrate the trusted virtual machine from the second host to the first host.

8. The apparatus of claim 7, wherein migrating the trusted virtual machine from the second host to the first host comprises migrating the state of the second peripheral device to the first peripheral device.

9. The apparatus of claim 5, at least one of:
wherein the one or more processing devices are further configured to:
receive, by a second instance of the trusted virtual machine executed in a second host, a second hash value; and
store, by the second instance of the trusted virtual machine, the second hash value; and
wherein the first hash value is calculated based on a configuration state of the first peripheral device and the second hash value is calculated based on a configuration state of the second peripheral device.

10. The apparatus of one of claims 5 to 9:
wherein, to receive the first hash value, the one or more processing devices are further configured to receive a plurality of first hash values corresponding to a plurality of interfaces of the first peripheral device;
wherein, to load the second hash value, the one or more processing devices are further configured to load a plurality of second hash values corresponding to a plurality of interfaces of the second peripheral device; and
wherein, to trust the first peripheral device, the one or more processing devices are further configured to trust the first peripheral device based on each first hash value of the plurality of first hash values matching a corresponding second hash value in the plurality of second hash values.

11. A non-transitory computer readable storage medium storing instructions which, when executed, cause a processing device to:
receive, by a first instance of a trusted virtual machine and from a first peripheral device coupled to a first host executing the first instance of the trusted virtual machine, a first hash value calculated in a trusted execution environment of the first host and based on a state of the first peripheral device;
load, by the first instance of the trusted virtual machine, a second hash value calculated based on a state of a second peripheral device coupled to a second host; and
trust, by the first instance of the trusted virtual machine, the first peripheral device based on a match between the first hash value and the second hash value.

12. The non-transitory computer readable storage medium of claim 11, at least one of:
wherein the instructions, when executed, further cause the processing device to:
receive, by a second instance of the trusted virtual machine executed in a second host, a second hash value; and
store, by the second instance of the trusted virtual machine, the second hash value; and
wherein, to migrate the trusted virtual machine from the second host to the first host, the instructions, when executed, further cause the processing device to migrate the state of the second peripheral device to the first peripheral device.

13. The non-transitory computer readable storage medium of claim 11, wherein the first hash value is included in a first Trusted Execution Environment (TEE) Device Interface Security Protocol (TDISP) Device Interface Report.

14. The non-transitory computer readable storage medium of claim 13, wherein the instructions, when executed, further cause the processing device to:
request, by the second instance of the trusted virtual machine, a second TDISP Device Interface Report comprising the second hash value in response to a command to migrate the trusted virtual machine; and
migrate the trusted virtual machine from the second host to the first host.

15. The non-transitory computer readable storage medium of claim 14:
wherein, to receive the first hash value, the instructions, when executed, further cause the processing device to receive a plurality of first hash values corresponding to a plurality of interfaces of the first peripheral device;
wherein, to load the second hash value, the instructions, when executed, further cause the processing device to load a plurality of second hash values corresponding to a plurality of interfaces of the second peripheral device; and
wherein, to trust the first peripheral device, the instructions, when executed, further cause the processing device to trust the first peripheral device based on each first hash value of the plurality of first hash values matching a corresponding second hash value in the plurality of second hash values.
